# EUROPÄISCHE PATENTSCHRIFT

(11) **EP 0 398 349 B1**
(45) Veröffentlichungstag und Bekanntmachung des Hinweises auf die Patenterteilung: **20.04.1994**
(21) Anmeldenummer: 90109447.4
(22) Anmeldetag: 18.05.1990
(51) Int. Cl.: B65G 1/08, B65G 47/88, B65G 47/08

(54) **Einrichtung zur automatischen Entnahme von Gegenständen von einer Förderstrecke**
Device for automatic taking-out of articles from a transporting track
Dispositif pour reprises automatiques des articles d'une voie de transport

(30) Priorität: 19.05.1989 DE 3916333
(43) Veröffentlichungstag der Anmeldung: 22.11.1990
(73) Patentinhaber: Heinrich Niederberger KG, D-83661 Lenggries (DE)
(72) Erfinder: Pichelmayr, Florian, D-83676 Jachenau (DE); Stedele, Wilhelm, D-83676 Jachenau (DE)
(74) Vertreter: Tiedtke, Harro, Dipl.-Ing.

(56) Entgegenhaltungen:
- DE-A- 2 127 309
- DE-A- 2 500 786

## Beschreibung

Die Erfindung bezieht sich auf eine Einrichtung zur automatischen Entnahme von Gegenständen, insbesondere Behältern von einer Förderstrecke gemäß dem Oberbegriff des Patentanspruchs 1 und bekannt aus DE-A-2500786.

Derartige Einrichtungen kommen beispielsweise in Kühlhäusern der Lebensmittel verarbeitenden Industrie zum Einsatz. Um die Lagerkosten der Produkte zu senken, ist man einerseits bestrebt, möglichst geringe Mengen einzulagern, andererseits werden zur Lagerung der Minimalmengen Lagersysteme eingesetzt, die einen weitgehend automatischen Betrieb ermöglichen. Als besonders vorteilhaft haben sich Lagersysteme erwiesen, die aus mehreren über- und nebeneinander angeordneten Rollenbahnen zur Aufnahme des Lagerguts bestehen, wobei die Förderrichtung auf den Rollenbahnen im wesentlichen parallel zueinander ist. Die ein- bzw. auszulagernden Produkte werden vorzugsweise in genormten Behältern aufbewahrt, wobei jeweils einer oder mehreren Rollenbahnen eine Produktgruppe zugeordnet ist. Die Rollenbahnen eines Regalsystems münden in eine Abgabe- bzw. Aufgabebereich, in dem die Behälter durch ein quer zu den Rollenbahnen verfahrbares Flurförderfahrzeug mit einem diesem zugeordneten Handlingsgerät von den Rollenbahnen entnehmbar sind. Falls die Lagerplätze des Kühlhauses durch einen Zentralrechner verwaltet werden, kann das Flurförderfahrzeug zentral von diesem Rechner gesteuert werden, so daß im Inneren des Kühlhauses kein Lagerpersonal vorgesehen werden muß. Um die Entnahme der Behälter zu erleichtern, sind die Rollenbahnen zum Entnahmebereich hin leicht abfallend ausgebildet, so daß die Behälter durch die Schwerkraftwirkung in der Förderrichtung bewegbar sind. Am Ende jeder Rollenbahn ist eine Stoppplatte als Anschlag für die Behälter angeordnet, die mittels eines Pneumatikzylinders absenkbar ist. Beim Anfahren einer Rollenbahn betätigt das Handlingsgerät den dieser Rollenbahn zugeordneten Pneumatikzylinder, wodurch die Stoppplatte abgesenkt wird und der Behälter aufgrund der Rollenbahnneigung auf das Flurförderfahrzeug bzw. das Handlingsgerät aufrollt.

Da die Behälter auf der Rollenbahn in Förderrichtung entlang ihrer benachbarten Stirnflächen aneinander anliegen, muß die Stoppplatte nach der Entnahme eines Behälters wieder in ihre Anschlagstellung zurückbewegt werden, bevor der nächste Behälter das Rollenbahnende erreicht hat.

Man hat bereits versucht, der unbeabsichtigten Entnahme eines folgenden Behälters vorzubeugen, indem die Fördergeschwindigkeit des zu entnehmenden Behälters gegenüber dem nachfolgenden Behälter durch einen stärker geneigten Abschnitt der Rollenbahn erhöht wurde. Derartige Maßnahmen sind jedoch von der Schwerkraftwirkung und damit vom Behältergeweicht abhängig, so daß die Fördergeschwindigkeit des nachfolgenden Behälters bei verschiedenen Fördergutgewichten nicht reproduzierbar ist.

Jeder Stoppplatte ist ein Pneumatikzylinder mit den entsprechenden Steuer- und Schalteinrichtungen zugeordnet. D.h., der vorrichtungstechnische Aufwand und damit die Investitionskosten sind in einem vorstehend beschriebenen Lagersystem durch die Verwendung herkömmlicher Entnahmeeinrichtungen sehr hoch. Darüber hinaus stellen die zur Betätigung der Stoppplatte notwendigen pneumatischen Steuer- und Schalteinrichtungen eine permanente Fehlerquelle dar, die beispielsweise aufgrund von Undichtigkeiten im Druckluftsystem oder defekte Schaltventile zu Störungen im automatischen Ein- und Auslagerungsbetrieb führen können.

Der Erfindung liegt die Aufgabe zugrunde, die gattungsgemäße Einrichtung zur Entnahme von Gegenständen derart weiterzubilden, daß der vorrichtungstechnische Aufwand verringert und eine zuverlässige Entnahme von Behältern gewährleistet ist.

Diese Aufgabe wird erfindungsgemäß durch die kennzeichnenden Merkmale des Patentanspruchs 1 gelöst.

Durch die beispielsweise von dem Handlingsgerät gegen die Rückstellkraft einer mechanischen Rückführeinrichtung verschwenkbare Wippe, wird beim Absenken der Stoppeinrichtung eine Auflaufeinrichtung angehoben, auf die der folgenden Behälter aufläuft. Nach der Entnahme eines Behälters schwenkt die Wippe aufgrund der Rückführeinrichtung selbständig in ihre Ausgangstellung zurück. Erst nach diesem Zurückschwenken der Wippe kann der folgende Behälter zur Stoppeinrichtung weitertransportiert werden.

Ist die Rollenbahn für die Lagerung genormter, gleichbleibender Behältergrößen vorgesehen, kann durch die Anordnung der Stopp- und Auflaufeinrichtung gemäß Patentanspruch 2, der zu entnehmende Behälter durch die Auflaufeinrichtung einseitig angehoben und der Entnahmevorgang beschleunigt werden, wobei die Auflaufeinrichtung vorzugsweise gemäß Anspruch 8 als eine Rolle ausgebildet ist.

Eine besonders einfache Betätigung der Wippe ergibt sich, wenn diese im Bereich der Stoppeinrichtung einen Ansatz trägt, an dem das Handlingsgerät zum Verschwenken der Wippe angreifen kann.

Vorteilhafterweise sind die Stopp- und die Auflaufeinrichtung gemäß den Patentansprüchen 4 bis 6 an der Wippe befestigt und erstrecken sich über die gesamte nutzbare Breite der Rollenbahn, wobei die Wippe um eine horizontale Achse verschwenkbar ist. Auf diese Weise lassen sich auch unregelmäßig geformte Lagergüter von der Rollenbahn entnehmen, die beispielsweise lediglich entlang eines in Förderrichtung vorstehenden Umfangsabschnitts an der erfindungsgemäßen Entnahmeeinrichtung anliegen.

Ein besonders einfacher Aufbau der erfindungsgemäßen Entnahmeeinrichtung ergibt sich, wenn die Wippe und die Platte gemäß Patentanspruch 9 einstückig aus abgekantetem Stahlblech hergestellt werden.

Weitere vorteilhafte Weiterbildungen sind Gegenstand der übrigen Patentansprüche.

Die Erfindung wird nachstehend anhand eines Ausführungsbeispiels unter Bezugnahme auf die Zeichnungen näher erläutert. Es zeigen:
Fig. 1 eine schematische Schnittdarstellung der Entnahmeeinrichtung in unverschwenktem Zustand und
Fig. 2 eine schematische Darstellung der Entnahmeeinrichtung aus Fig. 1 in verschwenktem Zustand.

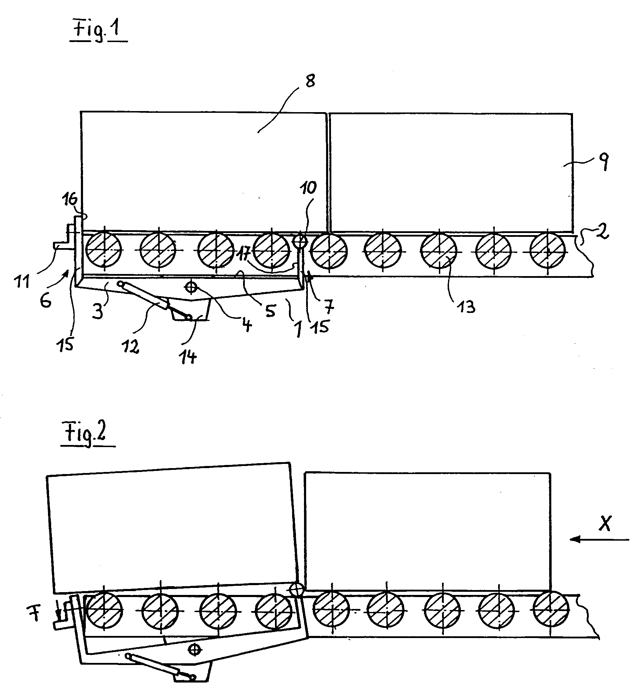

In den Fig. 1 und 2 ist eine Rollenbahn 2 eines Lagersystems dargestellt, das aus einer Vielzahl von über- und nebeneinander angeordneten Rollenbahnen 2 besteht, die alle in einem Entnahmebereich enden. Im Entnahmebereich am Ende jeder Rollenbahn befindet sich zur Erleichterung der Entnahme von Behältern eine vorzugsweise aus Stahlblech bestehende Wippe 1, die um eine Schwenkachse 4 schwenkbar am Ende jeder Rollenbahn befestigt ist. Die quer zur Förderrichtung der Rollenbahn 2 angeordnete Schwenkachse 4 ist an zwei, jeweils beidseitig der Rollenbahn 2 angeordneten Laschen 14 befestigt. Die parallel zur Transportrichtung X verlaufenden Umfangsflächen 3 sind von der horizontalen Grundfläche 5 der Wippe senkrecht nach unten abgekantet und haben jeweils eine mittige Ausnehmung zur Aufnahme der Schwenkachse 4 der Wippe 1. Die Höhe der Seitenflächen 3 nimmt von den Endabschnitten zur Ausnehmung hin zu, um eine für die auftretenden Biegebelastungen optimierte Form zu erhalten. Beide Endabschnitte 16, 17 der Wippe 1 sind etwa rechtwinklig zu deren Grundfläche 5 nach oben gebogen, wobei der vordere Endabschnitt 16 als Stoppeinrichtung 6 für die auf der Rollenbahn 2 befindlichen Behälter 8 und der hintere Endabschnitt 17 der Wippe 1 als Auflaufeinrichtung 7 für die einen zu entnehmenden Behälter 8 nachfolgenden Behälter 9 dient. Das in der Darstellung nach Fig. 1 gesehen obere Ende der Auflaufeinrichtung 7 ist durch eine Rolle 10 gebildet, die drehbar am Ende des aufgekanteten Endabschnitts 17 gelagert ist.

Um die Steifigkeit der Wippe 1 zu erhöhen, sind die Endabschnitte der Wippe 1 mit vertikal verlaufenden Umfangsflächen 15 versehen, die sich jeweils an die Seitenflächen 3 der Wippe 1 anschließen. Diese Umfangsflächen sind beispielsweise durch Abkanten oder durch Anbringen eines zusätzlichen Verstärkungsteils herstellbar.

Die Wippe 1 mit der Auflaufeinrichtung 7 und der Stoppeinrichtung 6 ist vorteilhafterweise derart ausgebildet, daß die Entnahmeeinrichtung entlang der gesamten nutzbaren Breite einer Rollenbahn 2 wirken kann. Die Wippe 1 stützt sich gegen eine Rückführeinrichtung, vorzugsweise eine Gasfeder 12 ab, mit der die Wippe 1 in Richtung der unverschwenkten Stellung vorgespannt ist, wobei die Gasfeder 12 mit ihrem von der Wippe 1 entfernten Ende an der Lasche 14 gelenkig gelagert ist. Die in Entnahmerichtung gesehen vordere Stirnfläche der Stoppeinrichtung 6 trägt mittig einen winkelförmigen Ansatz 11, an dessen vorstehendem Schenkel ein Handlingsgerät eines Flurförderfahrzeugs (hier nicht gezeigt) angreifen kann.

Im unverschwenkten Zustand (siehe Fig. 1) steht die Stoppeinrichtung 6, die beim beschriebenen Ausführungsbeispiel die Form einer Platte 6 hat, über die Transportebene, d.h. die Berührungsfläche zwischen den Rollen 13 der Rollenbahn und dem Behälter 8 vor, so daß dieser durch die benachbarte Anlagefläche der Platte 6 am Weitertransport gehindert ist. In dieser Stellung wird die Wippe 1 durch die Gasfeder 12 gegen einen Anschlag (nicht gezeigt) gedrückt. Die Rolle 10 der Auflaufeinrichtung 7 befindet sich im unverschwenkten Zustand unterhalb der Transportebene zwischen zwei benachbarten Rollen 13 in einem geeigneten Abstand zur Platte 6. An den Laschen 14 stützt sich auch die Gasfeder 12 zur Vorspannung der Wippe 1 ab.

Soll der Behälter 8 entnommen werden, fährt das Flurförderfahrzeug im Entnahmebereich vor die betreffende Rollenbahn 2, das Handlingsgerät wird senkrecht in der Höhe verfahren, bis ein Betätigungsarm des Handlingsgeräts von oben in Richtung F mit dem vorstehenden Schenkel des winkelförmigen Ansatzes 11 in Berührung kommt. Die Wippe 1 wird gegen die Vorspannung der Gasfeder 12 um die Schwenkachse 4 verschwenkt. Durch das Verschwenken der Wippe 1 bewegt sich die Platte 6 auf einer Kreisbahn nach unten, bis der Behälter 8 nicht mehr an der Anlagefläche der Platte 6 anliegt und von der Rollenbahn 2 abrollen kann. Die Abrollbewegung des Behälters 8 wird durch die Rolle 10 der Auflaufeinrichtung 7 unterstützt, die durch das Verschwenken der Wippe 1 nach oben, über die Transportebene hinaus bewegt wird (siehe Fig. 2) und den hinteren Bereich des Behälters 8 anhebt. Der folgende Behälter 9 rollt auf die Auflaufvorrichtung 7 auf und wird von dieser an der Weiterbewegung zum Rollenbahnende hin gehindert, während der Behälter 8 in Pfeilrichtung X von der Rollenbahn 2 auf eine Übergabestation des Flurförderfahrzeugs gefördert wird.

Nach der Beendigung der Übergabe, die beispielsweise durch eine geeignete Lichtschrankenschaltung erfaßt werden kann, entlastet das Handlingsgerät den Ansatz 11 und die Wippe 1 schwenkt aufgrund der Vorspannung durch die Gasfeder 12 in die Ausgangsstellung zurück. Mit dem Zurückschwenken der Wippe 1 bewegt sich die Rolle 10 der Auflaufeinrichtung 7 nach unten und der Behälter 9 wird bis zur Anlage an der Stoppeinrichtung 6 in die Entnahmeposition am Ende der Rollenbahn 2 weitertransportiert.

Die Schwenkachse 8 muß sich nicht notwendigerweise über die gesamte Breite der Wippe 1 erstrecken, sondern sie kann auch in zwei Teilachsen unterteilt sein, die sich jeweils von einer Lasche 14 durch die benachbarte Seitenfläche 3 der Wippe 1 erstrecken.

Bei der Verwendung von Behältern 8, 9 mit gleicher Länge wird die Länge der Wippe vorteilhafterweise so gewählt, daß die Rolle 10 an dem an der Stoppeinrichtung 6 anliegenden Behälter 8 in geringem Abstand vor der rückwärtigen Stirnfläche angreift. Kommen verschiedene Behältergrößen zum Einsatz, wird die Länge der Wippe entsprechend dem kleinsten eingesetzten Behälter 8 gewählt. Vorzugsweise wird der Abstand zwischen der Auflaufeinrichtung 7 und der Stoppeinrichtung 6 zumindest größer als die halbe Behälterlänge, d.h. größer als der Schwerpunktabstand von der vorderen Behälterfläche gewählt, so daß der Behälter 8 durch die Auflaufeinrichtung 7 an seinem rückwärtigen Ende anhebbar ist.

Die Erfindung ist nicht auf die Anwendung in einer Rollenbahn beschränkt, sondern kann bei jeder geeigneten Förderstrecke angewendet werden.

Offenbart ist eine Einrichtung zur automatischen Entnahme von Gegenständen, insbesondere von Behältern von einer Rollenbahn. Die Einrichtung beinhaltet eine schwenkbare Wippe, die an ihrem Auslaufende eine Stoppeinrichtung für die sich auf der Rollenbahn befindlichen Behälter trägt. An dem anderen Ende der Wippe ist eine Auflaufeinrichtung angeordnet, die in unverschwenktem Zustand der Wippe unterhalb der Transportebene der Rollenbahn liegt. Durch das Verschwenken der Wippe wird die Stoppeinrichtung abgesenkt und der vordere Behälter kann von der Rollenbahn entnommen werden, während die nachfolgenden Behälter durch die Auflaufeinrichtung an der Weiterbewegung gehindert werden. Nach der Entnahme des Behälters schwenkt die Wippe zurück in die Ausgangsstellung und der nachfolgende Behälter wird bis zu der Stoppeinrichtung am Rollenbahnende weitertransportiert.

## Patentansprüche

1. Einrichtung zur automatischen Entnahme von Gegenständen, bestehend aus einer Vielzahl von Transportbahnen, insbesondere Rollenbahnen, die jeweils an ihrem Bahnende eine für die Entnahme eines Gegenstandes absenkbare Stoppeinrichtung (6) tragen, die an dem Auslaufende einer Wippe (1) angeordnet und um eine im Winkel zur Transportrichtung (X) stehenden Schwenkachse (4) verschwenkbar ist, wobei die Wippe (1) mittels einer Rückführeinrichtung (12) in die Ausgangsstellung rückschwenkbar ist und an ihrem Einlaufabschnitt eine mit der Stoppeinrichtung (6) in Wirkverbindung stehende, hebbare Auflaufeinrichtung (7) für den nachfolgenden Gegenstand (9) angeordnet ist,
**dadurch gekennzeichnet**,
daß ein Handlingsgerät mehreren Transportbahnen zur Betätigung der Stoppeinrichtung zugeordnet ist,
das über einen Ansatz (11) an der Stoppeinrichtung (6) der ausgewählten Transportbahn eine Betätigungskraft in der Absenkrichtung (F) aufbringt.

2. Einrichtung nach Anspruch 1, **dadurch gekennzeichnet, daß** die hebbare Auflaufeinrichtung (7) in einen derartigen Abstand von der Stoppeinrichtung (6) angeordnet ist, daß durch die Bewegung der Auflaufeinrichtung (7) das rückwärtige Ende des zu entnehmenden Gegenstands (8) anhebbar ist.

3. Einrichtung nach Anspruch 1 oder 2, **dadurch gekennzeichnet, daß** die Stoppeinrichtung (6) und die Auflaufeinrichtung (7) an der Wippe (1) befestigt sind.

4. Einrichtung nach einem der Ansprüche 1 bis 3, **dadurch gekennzeichnet, daß** die Schwenkachse (4) horizontal und senkrecht zur Transportrichtung (X) angeordnet ist.

5. Einrichtung nach einem der Ansprüche 1 bis 4, **dadurch gekennzeichnet, daß** sich die Stoppeinrichtung (6) und die Auflaufeinrichtung (7) im wesentlichen über die nutzbare Breite der Rollenbahn (2) erstrecken.

6. Einrichtung nach einem der Ansprüche 3 bis 5, **dadurch gekennzeichnet, daß** die Stoppeinrichtung im wesentlichen eine Platte (6) ist.

7. Einrichtung nach einem der Ansprüche 3 bis 6, **dadurch gekennzeichnet, daß** die Auflaufeinrichtung (7) eine Rolle (10) trägt.

8. Einrichtung nach einem der vorhergehenden Ansprüche, **dadurch gekennzeichnet, daß** die Wippe (1) und die Platte (6) einstückig aus abgekantetem Stahlblech hergestellt sind, wobei ein am Auslaufende im wesentlichen senkrecht zur Wippe (1) ausgebildeter Abschnitt (7) die Rolle (10) trägt.

## Claims

1. A device for automatic taking-out of articles, consisting of a plurality of transporting tracks, in particular roller conveyors, each of which supports at its track end a stopping means (6) lowerable for taking-out an article, said stopping means being located at the delivery end of a rocker (1) and being swingable about a pivot axis (4) arranged at an angle with respect to the transporting direction (X), wherein said rocker (1) can be swung back to the initial position by a return means (12), and wherein at the arriving portion of said rocker a raisable abutting means (7) for the succeeding article (9) is disposed, which is operatively connected to said stopping means (6),
**characterized in that**
a handling device is assigned to several transporting tracks for actuating said stopping means, said handling means, via a projection (11), applying an actuating force in the lowering direction (F) to said stopping means (6) of the selected transporting track.

2. A device according to claim 1, **characterized in that** said raisable abutting means (7) is located at such a distance from the said stopping means (6) that the rear end of the article (8) to be taken out can be raised by the movement of said abutting means (7).

3. A device according to claim 1 or 2, **characterized in that** said stopping means (6) and said abutting means (7) are fixed to said rocker (1).

4. A device according to one of the claims 1 to 3, **characterized in that** said pivot axis (4) is arranged horizontally and perpendicular to said transporting direction (X).

5. A device according to one of the claims 1 to 4, **characterized in that** said stopping means (6) and said abutting means (7) extend substantially over the usable width of said roller conveyor (2).

6. A device according to one of the claims 3 to 5, **characterized in that** said stopping means is essentially a plate (6).

7. A device according to one of the claims 3 to 6, **characterized in that** said abutting means (7) supports a roller (10).

8. A device according to one of the preceding claims **characterized in that** said rocker (1) and said plate (6) are formed integrally of folded sheet steel, wherein a portion (7) formed at said delivery end substantially perpendicular to said rocker (1), supports said roller (10).

## Revendications

1. Dispositif de prélèvement automatique d'objets, composé d'une pluralité de pistes transporteuses, en particulier de pistes à rouleaux, portant chacune à leur extrémité un dispositif d'arrêt (6) abaissable, destiné au prélèvement d'un objet, disposé à l'extrémité d'évacuation d'une bascule (1) et pouvant être basculé autour d'un axe de basculement (4) faisant un angle par rapport à la direction de transport (X), la bascule (1) pouvant être rappelée par basculement, au moyen d'un dispositif de rappel (12), pour reprendre sa position initiale et un dispositif de franchissement (7) levable, relié fonctionnellement au dispositif d'arrêt (6) et destiné à l'objet (9) venant ensuite, étant prévu, caractérisé en ce qu'à plusieurs pistes de transport est associé, en vue d'actionner le dispositif d'arrêt, un appareil de manipulation appliquant, par l'intermédiaire d'un appendice (11) une force d'actionnement dans la direction de l'abaissement (F), sur le dispositif d'arrêt (6) de la piste de transport sélectionnée.

2. Dispositif selon la revendication 1, caractérisé en ce que le dispositif de franchissement (7) levable est disposé à une telle distance du dispositif d'arrêt (7), que l'extrémité arrière de l'objet (8) à prélever peut être soulevée par le déplacement du dispositif de franchissement (7).

3. Dispositif selon la revendication 1 ou 2, caractérisé en ce que le dispositif d'arrêt (6) et le dispositif de franchissement (7) sont fixés sur la bascule (1).

4. Dispositif selon l'une des revendications 1 à 3, caractérisé en ce que l'axe de basculement (4) est disposé horizontalement et perpendiculairement par rapport à la direction de transport (X).

5. Dispositif selon l'une des revendications 1 à 4, caractérisé en ce que le dispositif d'arrêt (6) et le dispositif de franchissement (7) s'étendent sensiblement sur toute la largeur utilisable de la piste à rouleaux (2).

6. Dispositif selon l'une des revendications 3 à 5, caractérisé en ce que le dispositif d'arrêt présente sensiblement la forme d'une plaque (6).

7. Dispositif selon l'une des revendications 3 à 6, caractérisé en ce que le dispositif de franchissement (7) porte un rouleau (10).

8. Dispositif selon l'une des revendications précédentes, caractérisé en ce que la bascule (1) et la plaque (6) sont fabriquées d'un seul tenant à partir d'une tôle d'acier pliée, une section (7), réalisée à l'extrémité d' évacuation et sensiblement perpendiculairement par rapport à la bascule (1) portant le rouleau (10).
